Europäisches Patentamt

European Patent Office

Office européen des brevets

(19)

(11) Numéro de publication: **0 187 079**
**B1**

(12) **FASCICULE DE BREVET EUROPEEN**

(45) Date de publication du fascicule du brevet:
05.07.89

(51) Int. Cl.⁴: **F 16 B 13/06**

(21) Numéro de dépôt: **85402389.2**

(22) Date de dépôt: **03.12.85**

(54) Cheville à expansion par cône.

(30) Priorité: **05.12.84 FR 8418511**

(43) Date de publication de la demande:
**09.07.86 Bulletin 86/28**

(45) Mention de la délivrance du brevet:
**05.07.89 Bulletin 89/27**

(84) Etats contractants désignés:
**BE DE FR GB IT NL SE**

(56) Documents cités:
**EP-A- 0 065 721**
**CH-A- 474 684**
**DE-A- 2 114 036**
**DE-A- 2 150 572**
**DE-A- 3 105 038**
**DE-A- 3 312 141**
**FR-A- 1 593 901**
**FR-A- 2 300 929**
**FR-A- 2 360 724**
**GB-A- 2 094 919**
**US-A- 4 478 542**

(73) Titulaire: **ILLINOIS TOOL WORKS INC., 8501 West Higgins Road, Chicago Illinois 60631-2887 (US)**

(72) Inventeur: **Ollivier, Jean, 31, rue Georges Bonnet, F-26000 Valence (Drôme) (FR)**
Inventeur: **Almeras, Roland, 15, rue du général Chapelle, F-07300 Tournon (Ardèche) (FR)**

(74) Mandataire: **Bloch, Robert et al, 2, square de l'Avenue du Bois, F-75116 Paris (FR)**

ACTORUM AG

## Description

La présente invention concerne une cheville à expansion par cône, comprenant une tige ou vis filetée à une extrémité, un cône taraudé à l'extrémité filetée de la tige, pour l'expansion d'une douille expansible disposée autour de la tige et des moyens agencés pour immobiliser, pendant son expansion, la douille en translation par rapport à la tige et pour, après l'expansion de la douille, permettre un déplacement de la tige en translation par rapport à la douille et donc le vissage de la tige dans le cône.

Jusqu'au moment où le cône d'expansion s'immobilise, et avec lui la douille expansible, c'est-à-dire jusqu'à l'ancrage de la cheville, la distance entre la tête de la vis et la douille expansible doit rester pratiquement constante sinon la douille expansible peut, au cours de la pénétration du cône, se déplacer vers l'ouverture du trou de réception de la cheville, ce qui peut en affecter l'ancrage. En d'autres termes, il faut que la douille expansible, pendant son expansion, reste pratiquement immobile en translation. Une fois l'ancrage réalisé, et la douille ayant de toutes façons été légèrement déplacée vers l'ouverture du trou de réception de la cheville lors de l'expansion, c'est-à-dire qu'elle est remontée, il est nécessaire de plaquer fermement la pièce à fixer contre le matériau-support, dans lequel le trou de réception avait été préalablement ménagé, par serrage, en vissant la vis dans le cône d'expansion alors immobilisé.

On notera qu'une telle cheville peut servir à fixer n'importe quelle pièce à un matériau-support destiné à la recevoir; il s'agira de préférence de pièces lourdes à fixer à des matériaux durs, comme des matériaux de construction par exemple.

La demanderesse avait déjà proposé une cheville du type mentionné ci-dessus, dans laquelle les moyens d'immobilisation comprennent une entretoise disposée autour de la vis, entre la tête de la vis et la douille expansible, la douille étant, au départ, en appui contre une collerette cisaillable de l'entretoise par une portion en saillie axiale.

Mais, pour diverses raisons, dont un manque de souplesse, la douille expansible, lors de son expansion, provoquait un cisaillement prématuré de la collerette de l'entretoise.

On connaît également une cheville du type mentionné ci-dessus, notamment par le brevet français 1 592 228, dans laquelle les moyens d'immobilisation comprennent une bague intermédiaire entre une entretoise, en l'occurrence une portion de diamètre élargi de la vis, et la douille expansible, et en appui contre celles-ci, la bague intermédiaire étant agencée pour, après l'expansion de la douille, fléchir et se déformer élastiquement, ou gonfler, sous l'action du vissage de la vis dans le cône d'expansion.

Mais une telle cheville présente l'inconvénient que la bague intermédiaire, déjà au cours de l'expansion de la douille et surtout lors du blocage final, risque de fléchir vers l'intérieur et perturber ainsi le vissage et dévissage de la vis.

La présente invention vise donc à perfectionner cette dernière cheville pour en éliminer l'inconvénient.

On connaît encore par le document EP-A 0 065 721 une cheville d'un type similaire. Si, à certains égards, on peut considérer que sa bague intermédiaire est rigide dans les directions axiale et radiale, elle ne l'est toutefois que jusqu'à un certain degré, puisque, sous l'action d'une portion tronconique de l'entretoise de cette cheville, elle subit un étirage radial.

Dans ces conditions, la présente demande concerne une cheville à expansion par cône, comprenant une tige à une extrémité de celle-ci, un cône agencé pour être entraîné en translation par la tige et assurer l'expansion d'une douille expansible disposée autour de la tige, et, disposées autour de la tige, une entretoise et une bague intermédiaire en appui contre l'entretoise et la douille expansible, pour immobiliser, pendant son expansion, la douille en translation par rapport à la tige cheville caractérisée par le fait que la douille expansible comporte une portion de diamètre extérieur rétréci ménageant un épaulement, la bague intermédiaire est axialement et radialement rigide et elle est en appui axial contre l'épaulement, en appui radial contre la portion rétrécie de la douille expansible, en appui axial contre une collerette cisaillable de l'entretoise et en appui radial contre une portion rétrécie de l'entretoise.

Grâce à l'invention, d'une part la bague intermédiaire ne peut plus fléchir, ou flamber, et d'autre part, lors de l'expansion, même si la douille expansible subit une légère remontée, son action sur la bague intermédiaire, qui pourrait se répercuter sur l'entretoise, s'exerce par une surface annulaire réduite, ce qui en limite considérablement les effects.

Le montage de la douille, de la bague intermédiaire et de l'entretoise est un montage télescopique qui procure l'avantage de maintenir constant le diamètre intérieur de l'alésage de réception de la tige filetée.

Il est avantageux de prévoir sur la portion rétrécie de la douille expansible une gorge annulaire pour en accroître l'élasticité et réduire la poussée de la douille sur la bague intermédiaire.

Lorsque la douille expansible est pourvue de fentes d'expansion, ce qui est généralement le cas, grâce à sa portion rétrécie et à l'épaulement d'appui radial ainsi ménagé, sur lequel débouchent également ces fentes, celles-ci peuvent naturellement recevoir des ergots d'indexage anti-rotation solidaires de la bague intermédiaire, sans qu'il n'ait été nécessaire de procéder à un usinage particulier supplémentaire de la douille expansible.

Enfin, et bien que la réaction de la bague intermédiaire sur l'entretoise, et plus particulièrement sur sa collerette, lors d'une éventuelle remontée de la douille au cours de l'expansion, soit aussi faible que possible, il est préférable de prévoir des créneaux axiaux prolongeant la bague intermédiaire, en appui radial sur la collerette cisaillable de l'entretoise.

En cas de remontée de la douille expansible, lors de l'expansion, son action est limitée à celle de ces créneaux. Ce n'est que lors du blocage final que l'entretoise, déplacée alors dans l'autre direction vers le fond du trou d'ancrage, provoque elle-même le cisaillement de sa collerette contre toute la surface annulaire radiale de la bague intermédiaire.

On remarquera ici que la caractéristique essentielle de l'invention pourrait tout aussi bien s'appliquer à une cheville comprenant une tige filetée à ses deux extrémités, avec un écrou monté sur la portion filetée opposée à celle du cône d'expansion taraudé. La rotation de l'écrou pour l'ancrage de la douille, provoquerait la remontée de la tige, et avec elle celle du cône, alors solidaire en translation de la tige, pour assurer l'expansion, les autres éléments de la cheville, avec leurs fonctions, restant inchangés. Le blocage final de la pièce à fixer serait ensuite réalisé à l'aide de l'écrou vissé sur la tige. Une fente de vissage ménagée à l'extrémité de la vis portant l'écrou permettrait en outre, avant blocage de la pièce, de visser la tige dans le cône immobilisé et de régler le dépassement de la tige hors du trou d'ancrage.

Ou pourrait également concevoir que la tige et le cône d'expansion forment un ensemble monobloc, la tige restant filetée à son extrémité opposée. Dans ce cas, alors, le blocage final de la pièce pourrait toujours être obtenu par un vissage de l'écrou, mais le réglage précédent ne pourrait plus être effectué.

L'invention sera mieux comprise à l'aide de la description de plusieurs formes de réalisation de la cheville de l'invention en référence aux dessins annexés, sur lesquels:

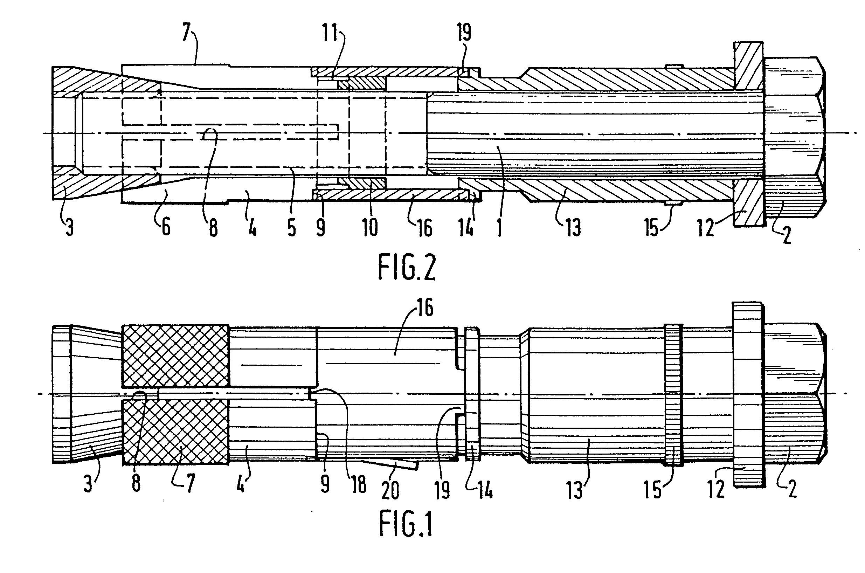

– la figure 1 représente une vue de la cheville de l'invention, avec une première forme de réalisation de la bague intermédiaire;
– la figure 2 représente une vue en coupe axiale de la cheville de la figure 1;
– le figure 3 représente une vue en perspective de la bague intermédiaire de la cheville des figures 1 et 2;
– la figure 4 représente une vue en perspective d'une deuxième forme de réalisation de la bague intermédiaire de la cheville de l'invention;
– la figure 5 représente une vue en perspective d'une troisième forme de réalisation de la bague intermédiaire de la cheville de l'invention, et
– la figure 6 représente une vue en coupe axiale de la cheville des figures 1 à 3, après expansion, mais avant blocage d'une pièce à fixer.

La cheville représentée sur les dessins comporte une tige, ou vis, 1 pourvue, à une extrémité, d'une tête 2 et d'une rondelle de serrage 12, solidaire de la tête, et, à l'autre extrémité, d'une portion filetée 5 dont le filetage est destiné à coopérer avec le taraudage d'un cône d'expansion 3. Une douille expansible 4 est disposée autour de la portion filetée 5 de la vis 1, et son extrémité 6 tournée vers l'extrémité de la vis comporte une surface intérieure conique complémentaire de la surface extérieure du cône d'expansion 3 pour recevoir celui-ci. Cette même extrémité 6 de la douille 4 comporte une surface extérieure pourvue d'aspérités anti-rotation 7, formant, comme dans l'exemple représenté, un moletage. Pour son expansion, la douille 4 comporte des fentes 8, ménagées depuis son extrémité libre tournée vers l'extrémité de la vis jusque légèrement au-delà d'un épaulement 9 dont il va être question ci-après. L'autre extrémité 10 de la douille 4, laquelle dans l'exemple représenté s'étend sur sensiblement un tiers de sa longueur, a un diamètre extérieur rétréci par rapport au reste de la douille, de sorte qu'il est ainsi ménagé l'épaulement radial 9 juste évoqué. Entre cet épaulement 9 et l'extrémité libre de la portion rétrécie 10 de la douille 4 est ménagée une gorge annulaire 11, dite d'élasticité.

En appui contre la rondelle 12 et autour de la partie non filetée de la tige 1 est disposée une entretoise 13. Légèrement en deçà de l'extrémité de l'entretoise opposée à la tête 2 de la vis, et solidaire de l'entretoise, se trouve une collerette cisaillable 14, dont la fonction apparaîtra plus loin. Dans la partie centrale de l'entretoise, sa surface extérieure porte une indication de repérage 15, sous forme ici d'une bande annulaire.

Une bague intermédiaire 16 est montée entre la douille 4 et l'entretoise 13. Elle est en appui radial, d'un côté, contre l'épaulement 9 de la douille 4 et, de l'autre côté contre la surface radiale extérieure de la collerette 14 de l'entretoise par des créneaux axiaux 19 la prolongeant. Ces créneaux 19 sont ici diamétralement opposés. La bague est en appui radial, d'un côté, contre la portion de diamètre extérieur rétréci 10 de la douille 4 et, de l'autre côté, par ses créneaux 19, contre la portion d'extrémité de l'entretoise 13 s'étendant au-delà de la collerette 14.

La bague intermédiaire 16 est formée, dans l'exemple considéré, à partir d'une bande de tôle rigide enroulée en cylindre refermé sur lui-même le long des arêtes 17. Cette bague intermédiaire, qui pourrait aussi être en acier moulé ou même réalisée à partir d'un tube, est donc rigide axialement et même radialement.

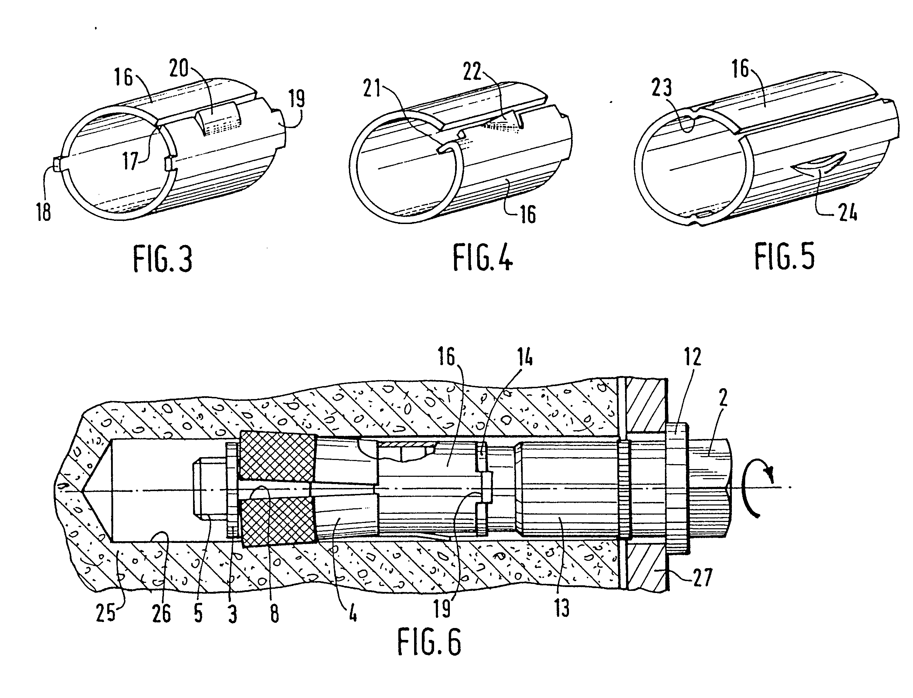

Dans la forme de réalisation de la figure 3, de l'autre côté que les créneaux 19, la bague 16 porte des ergots 18, dits d'indexage anti-rotation, prolongeant axialement la bague et introduits dans des portions de fente 8 de la douille 4 débouchant sur l'épaulement 9. Pour compléter éventuellement l'action de ces ergots, la bague 16, à sa périphérie extérieure, porte une, comme ici, ou plusieurs déformations externes 20, ou bossages, agencées pour créer un frottement anti-rotation et faciliter ainsi le départ de l'expansion de la douille 4. Dans le cas de la figure 3, la déformation externe est un embouti cylindrique.

Dans la forme de réalisation de la figure 4, les moyens d'indexage anti-rotation sont constitués par une portion de languette axiale 21 rabattue vers l'axe de la bague et introduite dans une portion de fente 8 de la douille 4, s'étendant dans sa portion de diamètre extérieur rétréci 10. La déformation externe est un embouti triangulaire 22.

Dans la forme de réalisation de la figure 5, les moyens d'indexage sont constitués par des crans axiaux 23 formés par emboutissage depuis la surface extérieure de la bague. La déformation axiale est un embouti sphérique 24.

Ayant décrit la cheville dans sa structure, abordons maintenant son fonctionnement.

Après avoir foré, dans un matériau-support 25, un trou 26 de réception, ou d'ancrage, de la cheville, on l'introduit dans ce trou, au travers d'une pièce 27 à fixer au matériau, jusqu'au repère annulaire 15. L'effort qu'il faut fournir pour introduire la cheville, à cause de l'embouti 20, 22, 24 de la bague intermédiaire 16, freine en rotation cette bague intermédiaire qui, à son tour, indexe en rotation la douille expansible 4. Quand on visse la vis 1, à l'aide de sa tête 2, le cône 3 s'introduit plus avant dans la douille 4 et en provoque l'expansion, c'est-à-dire l'écartement des portions de la douille s'étendant entre les fentes 8. Au cours de l'expansion, le moletage 7 contribue à empêcher la cheville d'être entraînée en rotation et en translation.

Si la douille 4 remonte au cours de l'expansion, ce qui est souvent le cas, elle entraîne avec elle la vis 1, grâce à la bague intermédiaire 16 et l'entretoise 13. Si l'effort que le cône d'expansion 3 exerce sur la douille 4 se répercute sur la bague 16, d'ailleurs limité grâce à l'épaulement 19 et à la gorge 11, la bague 16, par ses créneaux 19, exerce un effort sur la collerette 14 de l'entretoise 13. Pendant cette phase d'expansion, tout au plus les créneaux 19 de la bague 16 enfoncent localement la collerette mais sans la cisailler si la surface d'appui des créneaux 19 est dimensionnée en conséquence.

La douille étant donc légèrement remontée au cours de l'ancrage, la pièce 27 à fixer peut ne pas être plaquée contre le matériau 25, comme elle le devrait. Alors, et la cheville ayant quand même été correctement ancrée, on va continuer de visser la vis 1. Le cône 3 ayant été immobilisé, la vis 1 va se visser dans le cône en descendant dans le trou d'ancrage. Au début de cette phase de blocage, qui peut d'ailleurs viser aussi à pallier des défauts de planéité ou de variations d'épaisseur, la tête 2 de la vis 1 entraîne l'entretoise 13, et donc sa collerette 14, à exercer un effort contre la bague intermédiaire. A un moment, cet effort va provoquer le cisaillement de la collerette 14 et permettre à la vis 1 de descendre et plaquer la pièce 27, grâce au montage télescopique de la bague 16 et de l'entretoise 13 qui alors s'introduit légèrement plus dans cette bague.

On remarquera que la fonction des créneaux 19 de la bague intermédiaire 16 pourrait être assurée par d'autres moyens, comme par exemple par des languettes embouties, ou des portions serties de la bague d'abord en appui contre la collerette cisaillable ou un épaulement de l'entretoise puis, après serrage, passées au-delà de la collerette ou de cet épaulement.

## Revendications

1. Cheville à expansion par cône, comprenant une tige (1), à une extrémité (5) de celle-ci, un cône (3) agencé pour être entraîné en translation par la tige et assurer l'expansion d'une douille expansible (4) disposée autour de la tige, et, disposées autour de la tige, une entretoise (13) et une bague intermédiaire (16) en appui contre l'entretoise et la douille expansible, pour immobiliser, pendant son expansion, la douille (4) en translation par rapport à la tige (1), cheville caractérisée par le fait que la douille expansible (4) comporte une portion (10) de diamètre extérieur rétréci ménageant un épaulement (9), la bague intermédiaire (16) est axialement et radialement rigide et elle est en appui axial contre l'épaulement (9), en appui radial contre la portion rétrécie (10) de la douille expansible (4), en appui axial contre une collerette cisaillable (14) de l'entretoise (13) et en appui radial contre une portion rétrécie de l'entretoise (13).

2. Cheville à expansion selon la revendication 1, dans laquelle le cône d'expansion et l'extrémité correspondante de la tige forment un ensemble monobloc, et l'autre extrémité de la tige est également filetée et porte un écrou.

3. Cheville à expansion selon la revendication 1, dans laquelle le cône d'expansion (3) est taraudé et monté sur une extrémité filetée (5) de la tige (1), la tige (1) pouvant, après l'expansion de la douille (4), être déplacée en translation par rapport à la douille (4) et vissée dans le cône (3).

4. Cheville à expansion selon la revendication 3, dans laquelle l'autre extrémité de la tige est également filetée et porte un écrou.

5. Cheville à expansion selon la revendication 4, dans laquelle une fente de vissage est ménagée dans ladite autre extrémité filetée de la tige portant l'écrou.

6. Cheville à expansion selon l'une des revendications 1 à 5, dans laquelle la portion rétrécie (10) de la bague intermédiaire (16) comporte une gorge annulaire d'élasticité (11).

7. Cheville à expansion selon l'une des revendications 1 à 6, dans laquelle la douille expansible (4) comporte des fentes d'expansion (8) et la bague intermédiaire (16) comporte des moyens d'indexage anti-rotation (18, 21, 23) introduits dans lesdites fentes.

8. Cheville à expansion selon la revendication 7, dans laquelle lesdits moyens d'indexage comportent des ergots (10) en saillie axiale, introduits dans les portions de fentes (8) de la douille (4) débouchant sur l'épaulement d'appui radial (9) de la douille (4).

9. Cheville à expansion selon la revendication 7, dans laquelle lesdits moyens d'indexage comportent une portion de languette axiale (21) rabattue vers l'axe de la bague intermédiaire (16) et introduite dans une portion de fente (8) de la portion rétrécie (10) de la douille (4).

10. Cheville à expansion selon la revendication 7, dans laquelle lesdits moyens d'indexage comportent des crans (23) emboutis et introduits dans des portions de fentes (8) de la portion rétrécie (10) de la douille (4).

11. Cheville à expansion selon l'une des revendications 1 à 10, dans laquelle la bague intermédiaire (16) comporte des créneaux (19) en saillie axiale et en appui radial contre la collerette cisaillable (14) de l'entretoise (13).

12. Cheville à expansion selon l'une des revendications 1 à 11, dans laquelle la bague intermédiaire (16) comporte une déformation externe anti-rotation (20, 22, 24).

**Claims**

1. Cone expansion plug, comprising a shaft (1), at one end (5) thereof, a cone (3) arranged to be driven in translation by the shaft and ensure the expansion of an expansible sleeve (4) disposed around the shaft and, disposed around the shaft, a distance piece (13) and an intermediate ring (16) abuting against the distance piece and the expansible sleeve, in order to, during its expansion, fix the sleeve (4) in translation with respect to the shaft (1), plug characterized in that the expansible sleeve (4) comprises a portion (10) having a narrowed external diameter providing a shoulder (9), the intermediate ring (16) is axially and radially rigid and it is in axial abutment against the abutment (9), in radial abutment against the narrowed portion (10) of the expansible sleeve (4), in axial abutment against a flange (14) of the distance piece (13) that can be shorn and in radial abutment against a narrowed portion of the distance piece (13).

2. Expansion plug according to claim 1, wherein the expansion cone and the corresponding end of the shaft form a one piece assembly, and the other end of the shaft is also threaded and mounts a nut.

3. Expansion plug according to claim 1, wherein the expansion cone (3) is threaded and mounted on a threaded end (5) of the shaft (1), the shaft (1), after expansion of the sleeve (4), can be moved in translation with respect to the sleeve (4) and screwed in the cone (3).

4. Expansion plug according to claim 3, wherein the other end of the shaft is also threaded and mounts a nut.

5. Expansion plug according to claim 4, wherein a screwing slot is provided in said other threaded end of the shaft mounting the nut.

6. Expansion plug according to one of claims 1 to 5, wherein the narrowed portion (10) of the intermediate ring (16) comprises a resilient annular groove (11).

7. Expansion plug according to one of claims 1 to 6, wherein the expansible sleeve (4) comprises expansion slots (8) and the intermediate ring (16) comprises anti-rotation indexing means (18, 21, 23) introduced into said slots.

8. Expansion plug according to claim 7, wherein said indexing means comprise axially protruding catches (18), introduced into the slot portions (8) of the sleeve (4) opening on to the radial abutment shoulder (9) of the sleeve (4).

9. Expansion plug according to claim 7, wherein said indexing means comprise a portion of an axial tongue (21) turned down to the axis of the intermediate ring (16) and introduced into a slot portion (8) of the narrowed portion (10) of the sleeve (4).

10. Expansion plug according to claim 7, wherein said indexing means comprise pressed notches (23) introduced into slot portions (8) of the narrowed portion (10) of the sleeve (4).

11. Expansion plug according to one of claims 1 to 10, wherein the intermediate ring (16) comprises axially protruding crenels (19) and in radial abutment against the flange (14) that can be shorn of the distance piece (13).

12. Expansion plug according to one of claims 1 to 11, wherein the intermediate ring (16) comprises an external anti-rotation deformation (20, 22, 24).

**Patentansprüche**

1. Spreizdübel mit Spreizkonus, enthaltend einen Schaft (1), ein an dem einen Ende (5) des Schaftes angebrachtes Konusteil (3), das mittels des Schaftes translatorisch einziehbar ist, um das Spreizen einer spreizbaren Hülse (4) zu bewirken, die um den Schaft herumgelegt ist, ein den Schaft umgebendes Distanzrohr (13) und einen den Schaft umgebenden Zwischenring (16), der gegen das Distanzrohr und gegen die spreizbare Hülse anliegt, um die Hülse (4) während ihres Spreizens in ihrer translatorischen Bewegung relativ zum Schaft (1) zu sichern, dadurch gekennzeichnet, dass die spreizbare Hülse (4) zur Bildung einer Schulter (9) einen Abschnitt (10) mit einem verkleinerten Aussendurchmesser aufweist, dass der Zwischenring (16) in axialer und in radialer Richtung steif ist und axial gegen die Schulter (9), radial gegen den im Durchmesser verringerten Abschnitt (10) der spreizbaren Hülse (4), axial gegen einen abscherbaren Bund (14) des Distanzstückes (13) und radial gegen einen verringerten Abschnitt des Distanzrohres (13) anliegt.

2. Spreizdübel nach Anspruch 1, bei dem der Spreizkonus und das zugeordnete Ende des Schaftes aus einem Stück bestehen, während das andere Ende des Schaftes ein Gewinde aufweist und eine Mutter trägt.

3. Spreizdübel nach Anspruch 1, bei dem der Spreizkonus (3) mit Innengewinde versehen und auf ein ein Gewinde aufweisendes Ende (5) des Schaftes (1) aufgeschraubt ist, wobei der Schaft (1) nach dem Spreizen der Hülse (4) translatorisch relativ zur Hülse (4) verlagert und in den Konus (3) eingeschraubt werden kann.

4. Spreizdübel nach Anspruch 3, bei dem das andere Ende des Schaftes ebenfalls mit einem Gewinde versehen ist und eine Mutter trägt.

5. Spreizdübel nach Anspruch 4, bei dem ein Verschraubungsschlitz in diesem anderen, mit

Gewinde versehen und die Mutter tragenden Ende des Schaftes angebracht ist.

6. Spreizdübel nach einem der Ansprüche 1 bis 5, bei dem der verringerte Abschnitt (10) des Zwischenringes (16) eine Elastizitäts-Ringnut (11) aufweist.

7. Spreizdübel nach einem der Ansprüche 1 bis 6, bei dem die spreizbare Hülse (4) Spreizschlitze (8) aufweist, während der Zwischenring (16) rotationsverhindernde Verriegelungsorgane (18, 21, 23) aufweist, die in diese Schlitze eingeführt sind.

8. Spreizdübel nach Anspruch 7, bei dem die Verriegelungsorgane axial vorspringende Nasen (18) umfassen, die in die Abschnitte der Schlitze (8) der Hülse (4) eingeführt sind, die in den radialen Anschlagschultern (9) der Hülse (4) ausmünden.

9. Spreizdübel nach Anspruch 7, bei dem die Verriegelungsorgane einen axialen Zungenabschnitt (21) enthalten, der zur Achse des Zwischenringes (16) hin umgebogen ist und in einen Abschnitt des Schlitzes (8) des verkleinerten Abschnittes (10) der Hülse (4) eingreift.

10. Spreizdübel nach Anspruch 7, bei dem die Verriegelungsorgane tiefgezogene Einkerbungen (23) umfassen, die in die Abschnitte der Schlitze (8) des kleineren Abschnittes (10) der Hülse (4) eingreifen.

11. Spreizdübel nach einem der Ansprüche 1 bis 10, bei dem der Zwischenring (16) axial vorspringende Kräuselungen (19) aufweist, die radial gegen den abscherbaren Bund (14) des Distanzstückes (13) anliegen.

12. Spreizdübel nach einem der Ansprüche 1 bis 11, bei dem der Zwischenring (16) eine nach aussen vorspringende, rotationsverhindernde Verformung (20, 22, 24) aufweist.

FIG.1

FIG.2

FIG.3

FIG.4

FIG.5

FIG.6

EP 0 187 079 B1